# EUROPEAN PATENT APPLICATION

(11) **EP 4 129 579 A1**
(43) Date of publication of application: **08.02.2023**
(21) Application number: 21881806.0
(22) Date of filing: 22.09.2021
(51) Int. Cl.: B25J 9/16

(54) **MANIPULATOR, ROBOT, AND MANIPULATOR DRIVING METHOD AND APPARATUS**

(30) Priority: 20.10.2020 CN 202011123650
(71) Applicant: Tencent Technology (Shenzhen) Company Limited, Shenzhen, Guangdong 518057 (CN)
(72) Inventor: ZHANG, Dongsheng, Shenzhen, Guangdong 518057 (CN); GUO, Chufan, Shenzhen, Guangdong 518057 (CN); XIONG, Kun, Shenzhen, Guangdong 518057 (CN); WEI, Lei, Shenzhen, Guangdong 518057 (CN)
(74) Representative: AWA Sweden AB
(86) International application number: PCT/CN2021/119706
(87) International publication number: WO 2022/083387

(57) **Abstract**

A manipulator, a robot, and a manipulator driving method and apparatus are provided. The manipulator includes: at least two mechanical fingers (10) and finger driving assemblies (20); the mechanical finger (10) including a first finger segment (1), a second finger segment (2), and a third finger segment (3); the finger driving assembly (20) including a first drive device (41), a second drive device (51), and a third drive device (61); and the first drive device (41) being movably connected to the first finger segment (1) through a first transmission assembly (01), the second drive device (51) being movably connected to the second finger segment (2) through a second transmission assembly (02), and the third drive device (61) being movably connected to the third finger segment (3) through a third transmission assembly (03). Each finger segment is provided with an individual drive device, thereby improving overall flexibility of the manipulator and improving a degree of intelligence of the manipulator.

## Description

### RELATED APPLICATION

This application claims priority to Chinese Patent Application No. 202011123650.7, entitled "MANIPULATOR, AND MANIPULATOR DRIVING METHOD AND DEVICE" and filed with the National Intellectual Property Administration on October 20, 2020, which is incorporated herein by reference in its entirety.

### FIELD OF THE TECHNOLOGY

This application relates to the field of robots, and in particular, to a manipulator, a robot, and a manipulator driving method and apparatus.

### BACKGROUND OF THE DISCLOSURE

A manipulator is a commonly used end effector for a robot. With the wide application of artificial intelligence (AI), manipulators play an important role in production and life, and have become an indispensable device in production and life of people.

In the related art, a manipulator usually has a function of clamping an article and is used for clamping a target article.

However, the manipulator in the related art is usually not flexible enough to implement relatively complex operations.

### SUMMARY

Embodiments of this application provide a manipulator, a robot, and a manipulator driving method and apparatus, which help improve overall flexibility of the manipulator, thereby enabling the manipulator to have a more flexible structure. The technical solutions are as follows:

According to one aspect of this application, a manipulator is provided, including:
at least two mechanical fingers and a finger driving assembly corresponding to each of the mechanical fingers;
the mechanical finger including a first finger segment, a second finger segment, and a third finger segment;
a bottom portion of the third finger segment being movably connected to a top portion of the second finger segment, and a bottom portion of the second finger segment being movably connected to a top portion of the first finger segment;
the finger driving assembly including a first drive device for driving the first finger segment, a second drive device for driving the second finger segment, and a third drive device for driving the third finger segment; and
the first drive device being movably connected to the first finger segment through a first transmission assembly, the second drive device being movably connected to the second finger segment through a second transmission assembly, and the third drive device being movably connected to the third finger segment through a third transmission assembly.

According to one aspect of this application, a robot is provided, including the manipulator described above.

According to one aspect of this application, a manipulator driving method is provided, performed by a server, configured to control the manipulator described above, the method including:
determining a motion mode of the manipulator, the motion mode including at least one of a flat clamping motion mode, an enveloping clamping motion mode, and a rubbing motion mode;
generating a control signal according to the motion mode; and
sending the control signal to the finger driving assembly of the manipulator.

According to another aspect of this application, a driving apparatus is provided, including:
a determining module, configured to determine a motion mode of a manipulator, the motion mode including at least one of a flat clamping motion mode, an enveloping clamping motion mode, and a rubbing motion mode;
a generation module, configured to generate a control signal according to the motion mode; and
a sending module, configured to send the control signal to the finger driving assembly of the manipulator.

According to an aspect of this application, a computer device is provided, including: a processor and a memory, the memory storing at least one instruction, at least one program, and a code set or an instruction set, the at least one instruction, the at least one program, and the code set or the instruction set being loaded and executed by the processor to implement the manipulator driving method described above.

According to another aspect of this application, a computer-readable storage medium is provided, the computer-readable storage medium storing at least one instruction, at least one program, a code set, or an instruction set, the at least one instruction, the at least one program, the code set, or the instruction set being loaded and executed by a processor to implement the manipulator driving method described above.

According to another aspect of this application, a computer program product is provided, the computer program product storing at least one instruction, at least one program, a code set, or an instruction set, the at least one instruction, the at least one program, the code set, or the instruction set being loaded and executed by a processor to implement the manipulator driving method described above.

According to an aspect of this application, a chip is provided, the chip including a programmable logic circuit or a program, and the chip being configured to implement the manipulator driving method described above.

The technical solutions provided in the embodiments of this application have at least the following beneficial effects:

Each finger segment is provided with an individual drive device, so that each mechanical finger has the same number of degrees of freedom as the number of finger segments, allowing for various motion modes for article clamping, such as flat clamping, enveloping clamping, and rubbing motion modes, enabling the manipulator to complete autonomous object gripping, improving overall flexibility of the manipulator, and implementing a more flexible movement mode, thereby improving a degree of intelligence of the manipulator.

### BRIEF DESCRIPTION OF THE DRAWINGS

FIG. 1 is a main view of a manipulator according to an exemplary embodiment of this application.
FIG. 2 is a schematic structural diagram of a manipulator according to an exemplary embodiment of this application.
FIG. 3 is a schematic structural diagram of mechanical fingers and corresponding transmission assemblies according to an exemplary embodiment of this application.
FIG. 4 is a schematic structural diagram of a first finger segment, a first transmission assembly, a second finger segment, and a second transmission assembly of a manipulator according to an exemplary embodiment of this application.
FIG. 5 is a schematic structural diagram of a third finger segment and a third transmission assembly of a manipulator according to an exemplary embodiment of this application.
FIG. 6 is a schematic structural diagram showing that a manipulator is in a first motion mode according to an exemplary embodiment of this application.
FIG. 7 is a schematic structural diagram showing that a manipulator is in a second motion mode according to an exemplary embodiment of this application.
FIG. 8 is a schematic structural diagram showing that a manipulator is in a third motion mode according to an exemplary embodiment of this application.
FIG. 9 is a flowchart of a manipulator driving method according to an exemplary embodiment of this application.
FIG. 10 is a schematic structural diagram of a manipulator driving apparatus according to an exemplary embodiment of this application.
FIG. 11 is a schematic structural diagram of a computer device according to an exemplary embodiment of this application.

Reference numerals in the accompanying drawings are described as follows:
10-mechanical finger:
1-first finger segment, 2-second finger segment, 3-third finger segment, 201-drive rod at a bottom portion of the second finger segment, 301-a drive rod at a bottom portion of the third finger segment;
20-finger driving assembly:
41-first drive device; 51-second drive device; 61-third drive device;
01 -first transmission assembly:
42-first worm, 43-first worm gear;
02-second transmission assembly:
52-second worm, 53-second worm gear, 21-connecting rod assembly;
03-third transmission assembly:
62-third worm, 63-third worm gear, 31-connecting rod mechanism;
71-fourth rotating shaft, 72-fifth rotating shaft;
81-housing, 82-base, 83-fixed plate.

### DESCRIPTION OF EMBODIMENTS

Unless otherwise defined, all technical terms used in the embodiments of this application have the same meaning as commonly understood by those skilled in the field to which this application belongs.

"Front" and "rear" involved in the embodiments of this application are based on the front and rear shown in the accompanying drawings. A "first end" and a "second end" are opposite ends.

To make objectives, technical solutions, and advantages of this application clearer, the following further describes in detail implementations of this application with reference to the accompanying drawings.

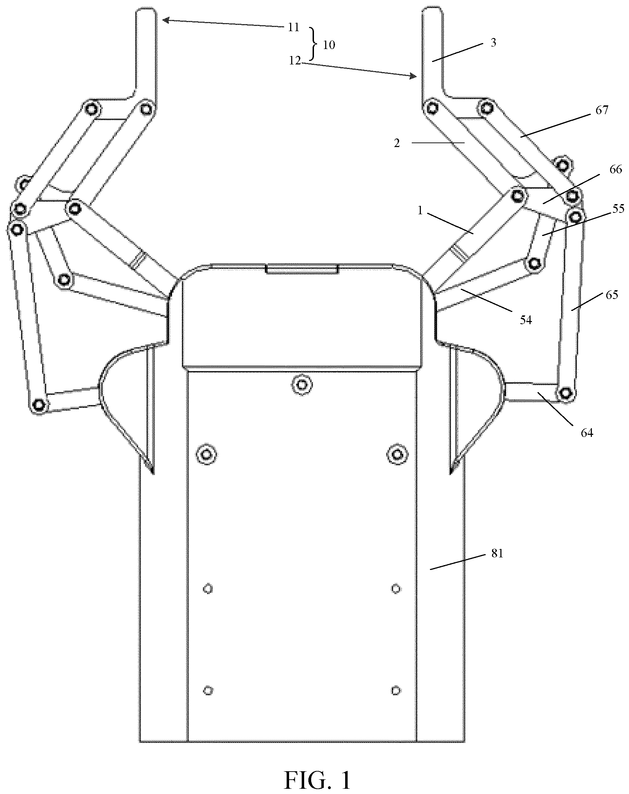

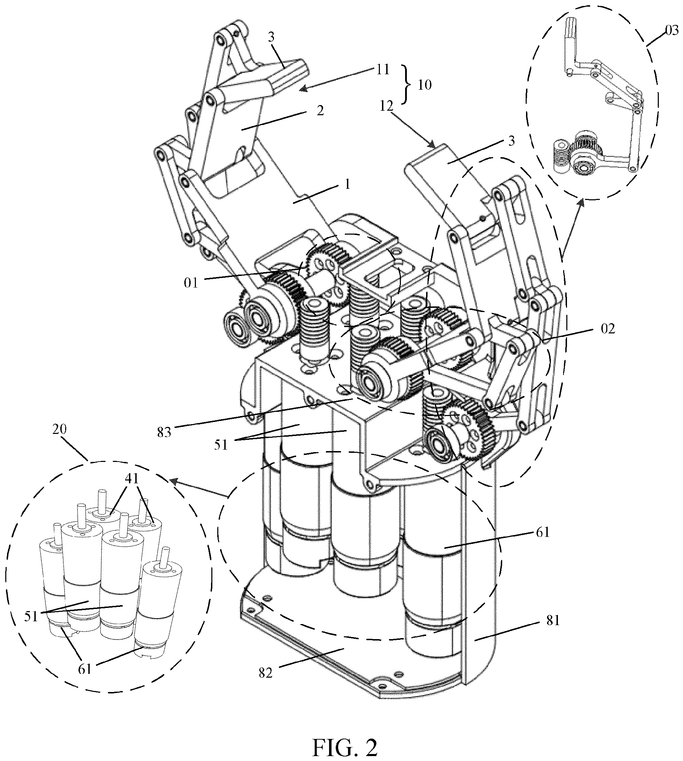

According to one aspect, the embodiments of this application provide a manipulator, which can improve overall flexibility of the manipulator. FIG. 1 and FIG. 2 are respectively a main view and a schematic structural diagram of a manipulator according to an exemplary embodiment of this application. The manipulator includes:
at least two mechanical fingers 10 and a finger driving assembly 20 corresponding to each of the mechanical fingers 10.

Each mechanical finger 10 includes a first finger segment 1, a second finger segment 2, and a third finger segment 3.

A bottom portion of the third finger segment 3 is movably connected to a top portion of the second finger segment 2, and a bottom portion of the second finger segment 2 is movably connected to a top portion of the first finger segment 1.

The finger driving assembly 20 includes a first drive device 41 for driving the first finger segment 1, a second drive device 51 for driving the second finger segment 2, and a third drive device 61 for driving the third finger segment 3.

The first drive device 41 is movably connected to the first finger segment 1 through a first transmission assembly 01, the second drive device 51 is movably connected to the second finger segment 2 through a second transmission assembly 02, and the third drive device 61 is movably connected to the third finger segment 3 through a third transmission assembly 03.

For example, the at least two mechanical fingers 10 move in conjunction with each other for achieving various motion modes for clamping an article. For example, movement directions of the mechanical fingers 10 may be the same or different, and may be set according to specific operating environments. This is not limited herein in this application. For example, the mechanical finger 10 may be in a flat plate shape with a particular thickness or in another shape that can implement clamping of an article, for example, a pillar shape. This is not limited herein in this application. For example, a relative position relationship, lengths, and materials of the mechanical fingers 10 may be determined according to actual needs. This is not limited herein in this application. For example, the mechanical fingers 10 include two mechanical fingers of the same length. For example, the mechanical fingers 10 are made of a metallic material, such as steel.

For example, the number of the mechanical fingers 10 may be determined according to actual needs. This is not limited herein in this application. For example, as shown in FIG. 2, the mechanical fingers 10 include a first mechanical finger 11 and a second mechanical finger 12, and a finger pulp of the first mechanical finger 11 faces a finger pulp of the second mechanical finger 12. For example, movement directions of the first mechanical finger 11 and the second mechanical finger 12 may be the same or different. For example, during clamping of an article, the first mechanical finger 11 and the second mechanical finger 12 respectively perform a rotation motion toward each other, and moving tracks of the two mechanical fingers are left-right symmetrical with respect to a central axis of the manipulator. For another example, after placement of an article, the first mechanical finger 11 and the second mechanical finger 12 respectively perform a rotation motion facing away from each other, and moving tracks of the two mechanical fingers are left-right symmetrical with respect to a central axis of the manipulator. For still another example, after clamping of an article, the first mechanical finger 11 and the second mechanical finger 12 perform an up and down rubbing motion, and moving tracks of the two mechanical fingers are symmetrical with respect to a central axis of the manipulator.

For example, as shown in FIG. 2, the mechanical fingers 10 each include three finger segments: the first finger segment 1, the second finger segment 2, and the third finger segment 3. For example, the bottom portion of the third finger segment 3 is movably connected to the top portion of the second finger segment 2 and is located on a top portion of the mechanical finger 10. For example, the bottom portion of the second finger segment 2 is movably connected to the top portion of the first finger segment 1 and is located on a middle portion of the mechanical finger 10. For example, a bottom portion of the first finger segment 1 is movably connected to the finger driving assembly 20 and is located on a base of the mechanical finger 10.

For example, shapes and sizes of the first finger segment 1, the second finger segment 2, and the third finger segment 3 may be set according to specific needs. This is not limited herein in this application. For example, the first finger segment 1, the second finger segment 2, and the third finger segment 3 are each in a flat plate shape with a particular thickness, and areas of the flat plate shapes gradually decrease.

There are various optional manners for the movable connections of the first finger segment 1, the second finger segment 2, and the third finger segment 3. For example, two ends of the first finger segment 1 are each provided with a hole, and the hole in the bottom portion of the first finger segment 1 is used for the movable connection to the finger driving assembly 20. For example, two ends of the second finger segment 2 are each provided with a hole, and a column pin sequentially passes through the hole in the top portion of the first finger segment 1 and the hole in the bottom portion of the second finger segment 2 to movably connect the holes. For example, the bottom portion of the third finger segment 3 is provided with a hole, and a column pin sequentially passes through the hole in the top portion of the second finger segment 2 and the hole in the bottom portion of the third finger segment 3 to movably connect the holes. For example, a size of the hole in the bottom portion of the first finger segment 1 is determined by a size of a component connected to the finger driving assembly 20. For example, except for the hole in the bottom portion of the first finger segment 1, the foregoing holes may be of the same size or different sizes and are used in conjunction with the column pin passing through.

For example, the bottom portion of the second finger segment 2 and the bottom portion of the third finger segment 3 are respectively provided with a drive rod 201 and a drive rod 301 that extend toward a rear face of the manipulator. The drive rods 201 and 301 are used for respectively supporting the second finger segment 2 and the third finger segment 3 and to movably connect the second finger segment 2 and the third finger segment 3 to the finger driving assembly 20 through ends of the drive rods 201 and 301.

For example, the finger driving assembly 20 is a power source that drives the mechanical finger 10 to move and provides power for the movement of the mechanical finger 10. For example, the finger driving assembly 20 may be any drive assembly including a drive device that can provide power. This is not limited herein in this application. For example, the finger driving assembly 20 is a drive assembly including a motor.

For example, the number of finger driving assemblies 20 is the same as the number of finger segments of the mechanical finger 10, for providing drive power for each finger segment. For example, as shown in FIG. 2, the finger driving assembly 20 includes the first drive device 41 for driving the first finger segment 1, the second drive device 51 for driving the second finger segment 2, and the third drive device 61 for driving the third finger segment 3.

For example, there are various optional solutions for implementing the transfer of power from the finger driving assembly 20 to the mechanical finger 10. This embodiment of this application provides an optional solution, which is specifically as follows:

The first drive device 41 is movably connected to the first finger segment 1 through the first transmission assembly 01, the second drive device 51 is movably connected to the second finger segment 2 through the second transmission assembly 02, and the third drive device 61 is movably connected to the third finger segment 3 through the third transmission assembly 03.

For example, the first transmission assembly 01, the second transmission assembly 02, and the third transmission assembly 03 are used for transmitting power generated by the finger driving assembly 20 to the corresponding finger segment connected thereto. For example, the first transmission assembly 01, the second transmission assembly 02, and the third transmission assembly 03 may be the same constituent member or different constituent members. This is not limited herein in this application. For example, constituent components of the first transmission assembly 01, the second transmission assembly 02, and the third transmission assembly 03 may share components or may be independent components. This is not limited herein in this application.

For example, to support the first transmission assembly 01, the second transmission assembly 02, and the third transmission assembly 03 and make the first transmission assembly 01, the second transmission assembly 02, and the third transmission assembly 03 fixed between the finger driving assembly 20 and the mechanical finger 10, the manipulator provided in this embodiment of this application further includes a fixed plate 83. For example, the fixed plate 83 is fixed between the mechanical finger 10 and the finger driving assembly 20. For example, a shape of the fixed plate 83 changes with arrangement positions of the first transmission assembly 01, the second transmission assembly 02, and the third transmission assembly 03. This is not limited herein in this application. For example, a material of the fixed plate 83 may be determined according to actual needs. This is not limited herein in this application.

For example, to enable each of the first transmission assembly 01, the second transmission assembly 02, and the third transmission assembly 03 to be stably fixed between the finger driving assembly 20 and the mechanical finger 10, the fixed plate 83 may be provided with through holes, so that the first transmission assembly 01, the second transmission assembly 02, and the third transmission assembly 03 can be connected to the finger driving assemblies 20 through the through holes. For example, the number of through holes is the same as the number of finger driving assemblies 20. This is not limited herein in this application.

For example, at least three through holes are provided in the fixed plate 83 for each mechanical finger, which are respectively a first through hole, a second through hole, and a third through hole. The first transmission assembly 01 is fixedly connected to the first drive device 41 through the first through hole. The second transmission assembly 02 is fixedly connected to the second drive device 51 through the second through hole. The third transmission assembly 03 is fixedly connected to the third drive device 61 through the third through hole.

For example, sizes, shapes, and positions of the through holes in the fixed plate 83 change according to connection portions of the finger driving assembly 20 with the first transmission assembly 01, the second transmission assembly 02, and the third transmission assembly 03. This is not limited herein in this application. For example, the finger driving assembly 20 includes three groups of symmetrical motors. In this case, the through hole is circular, with a diameter the same as a diameter of a transmission shaft on a top portion of the motor.

For example, as shown in FIG. 2, the fixed plate 83 is a plate structure with a middle plane protruding upward and two end planes recessed downward. That the mechanical fingers 10 include the first mechanical finger 11 and the second mechanical finger 12 is used as an example. With a central axis of the manipulator as a boundary, six through holes are symmetrically provided in the fixed plate 83. The first transmission assembly 01, the second transmission assembly 02, and the third transmission assembly 03 are each symmetrically provided with two groups of the through holes. The first drive device 41, the second drive device 51, and the third drive device 61 are each symmetrically provided with two groups of the through holes.

For example, the first transmission assembly 01 is fixedly connected to the first drive device 41 through a through hole at a front location of the middle plane of the fixed plate 83. The second transmission assembly 02 is fixedly connected to the second drive device 51 through a through hole at a rear location of the middle plane of the fixed plate 83. The second drive device 51 is located behind the first drive device 41 and is distributed in correspondence with the first drive device 41. The third transmission assembly 03 is fixedly connected to the third drive device 61 through through holes in the two end planes of the fixed plate 83.

For example, to ensure safe use of the manipulator and cause a component with a potential safety hazard of the manipulator not to be exposed to a place where a human hand can reach, the manipulator provided in this embodiment of this application further includes a housing 81 and a base 82. For example, the base 82 is fixedly provided on a bottom portion of the housing 81, and the housing 81 and the base 82 are used for packaging and fixing the finger driving assembly 20, the first transmission assembly 01, the second transmission assembly 02, and the third transmission assembly 03. The fixed plate 83 is fixedly provided between the housing 81 and the base 82.

For example, a shape of the housing 81 changes according to structures of the finger driving assembly 20, the first transmission assembly 01, the second transmission assembly 02, and the third transmission assembly 03. This is not limited herein in this application. For example, the housing 81 includes two half housings at the front and rear, and the two half housings are housings having the same specification and two raised ends. For example, the base 82 is located on the bottom portion of the housing 81 in a shape of a plate for closing the bottom portion of the housing 81.

For example, there are various implementations for the fixed connections between the housing 81, the base 82, and the fixed plate 83. This is not limited herein in this application. For example, the housing 81, the base 82, and the fixed plate 83 are fixedly connected by bolts and screw holes. Optionally, the fixed plate 83 has a particular thickness and a side face thereof is provided with a screw hole. The base 82 is provided with a screw hole. The housing 81 is also provided with screw holes at locations corresponding to the screw holes in the fixed plate 83 and the base 82. The housing 81, the base 82, and the fixed plate 83 are fixed by bolts.

For example, the manipulator may be used for a specific movement of clamping an article, or may be used only for a particular movement. This is not limited herein in this application.

Using clamping an article as an example, the working principle of the manipulator is as follows:

The first drive device 41, the second drive device 51, and the third drive device 61 provide power, and respectively transmit the power to the first finger segment 1, the second finger segment 2, and the third finger segment 3 through the first transmission assembly 01, the second transmission assembly 02, and the third transmission assembly 03, to implement the movement of clamping an article.

That the mechanical finger 10 includes the first mechanical finger 11 and the second mechanical finger 12 is used as an example, at least three motion modes of the manipulator are provided:

For a flat clamping motion mode, the finger driving assemblies 20 corresponding to the first mechanical finger 11 and the second mechanical finger 12 provide power, and transmit the drive power to the first finger segments 1, the second finger segments 2, and the third finger segments 3 through the first transmission assembly 01, the second transmission assembly 02, and the third transmission assembly 03, to drive the plurality of finger segments to collaboratively move, so that finger pulp surfaces of the two third finger segments 3 are parallel to each other and then simultaneously move in the clamping direction, thereby implementing the flat clamping motion mode.

For an enveloping clamping motion mode, the first drive device 41 first provides power and drives the first finger segment 1 through the first transmission assembly 01, after the first finger segment 1 comes into contact with an article or reaches a rotation limit of the first finger segment 1, the first drive device 41 stops providing the power. The second drive device 51 then provides power and drives the second finger segment 2 through the second transmission assembly 02, and after the second finger segment 2 comes into contact with the article or reaches a rotation limit of the second finger segment 2, the second drive device 51 stops providing the power. The third drive device 61 finally provides power and drives the third finger segment 3 through the third transmission assembly 03, and after the third finger segment 3 comes into contact with the article or reaches a rotation limit of the third finger segment 3, the third drive device 61 stops providing the power, thereby implementing the enveloping clamping of the article. In the foregoing process, the first drive device 41, the second drive device 51, and the third drive device 61 may alternatively simultaneously provide power, and an order of the power provision is not specifically limited, provided that the enveloping clamping motion mode can be achieved. This is not limited herein in this application.

For a rubbing motion mode, the finger driving assemblies 20 corresponding to the first mechanical finger 11 and the second mechanical finger 12 provide power and transmit the drive power to the first finger segments 1, the second finger segments 2, and the third finger segments 3 through the first transmission assembly 01, the second transmission assembly 02, and the third transmission assembly 03, to drive the plurality of finger segments to collaboratively move, so that finger pulp surfaces of the two third finger segments 3 are parallel to each other and then simultaneously move in a clamping direction to come into contact with an article to be clamped. Subsequently, the first drive device 41, the second drive device 51, and the third drive device 61 simultaneously provide power to drive the three finger segments of both the first mechanical finger 11 and the second mechanical finger 12 to collaboratively move at the same time. In this process, the three finger segments of the first mechanical finger 11 move in the same direction, the three finger segments of the second mechanical finger 12 move in an opposite direction, and the two groups of finger segments of the first mechanical finger 11 and the second mechanical finger 12 move at the same time, so that moving tracks of the first mechanical finger 11 and the second mechanical finger 12 are distributed centrally symmetrically, thereby implementing rubbing of the article.

In summary, for the manipulator provided in this embodiment of this application, the number of drive devices is set according to the number of finger segments, so that the manipulator has the same number of degrees of freedom as the number of finger segments. The manipulator provided in this embodiment of this application can overcome a problem of low flexibility of a conventional manipulator and implement self-adaptation to an article to be clamped, thereby completing more complex operations and improving a degree of intelligence of the manipulator to some extent.

During use of the manipulator, to implement power transmission, there are various optional manners for constituent members of the first transmission assembly 01, the second transmission assembly 02, and the third transmission assembly 03.

A worm and gear mechanism is a mechanical member used for transmitting motion and power between two staggered shafts, a worm being a driving member, and a worm gear being a driven member. In a middle plane where the worm gear is engaged with the worm, a relationship between the worm gear and the worm is equivalent to a relationship between gear teeth and a rack, and a shape of the worm is similar to that of a screw rod. Use of the worm and gear mechanism can obtain a relatively large transmission ratio and a more compact structure, so that relatively large power transmission can be carried. This is often used in occasions of two staggered shafts, a large transmission ratio, and intermittent operations. In addition, the movement of the worm and gear mechanism is equivalent to spiral transmission. As a multi-tooth engagement transmission mechanism, the worm and gear mechanism has advantages of stable transmission and relatively small noise. In addition, due to a relatively large axial force of the worm, when a lead angle of the worm is smaller than an equivalent friction angle between engaged gear teeth, the worm and gear mechanism can implement reverse self-locking, that is, only the worm can drive the worm gear and the worm gear cannot rotate the worm. The reverse self-locking performance can achieve a good safety protection effect.

For example, the first transmission assembly 01, the second transmission assembly 02, and the third transmission assembly 03 included in the manipulator provided in this embodiment of this application each include a constituent component of a worm and gear mechanism, and a component formed in another transmission manner also falls with the protection scope claimed in this application.

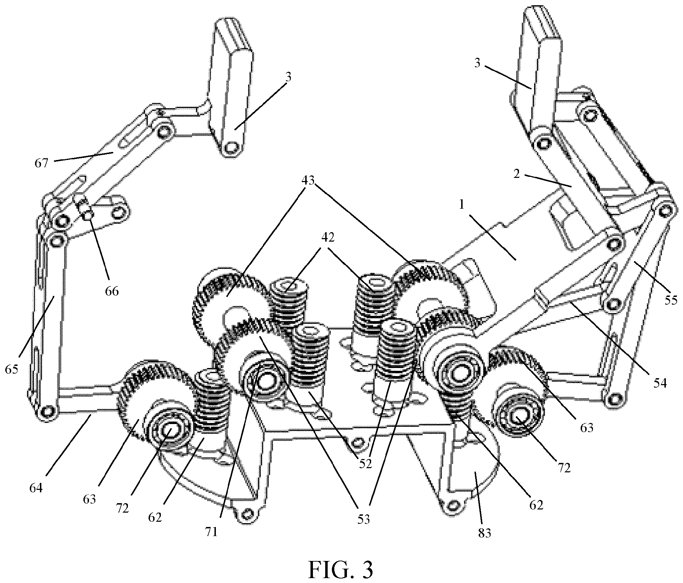

For example, as shown in FIG. 3, that the mechanical finger 10 includes a first mechanical finger 11 and a second mechanical finger 12 each have three finger segments is used as an example. This embodiment of this application provides the following optional manners:

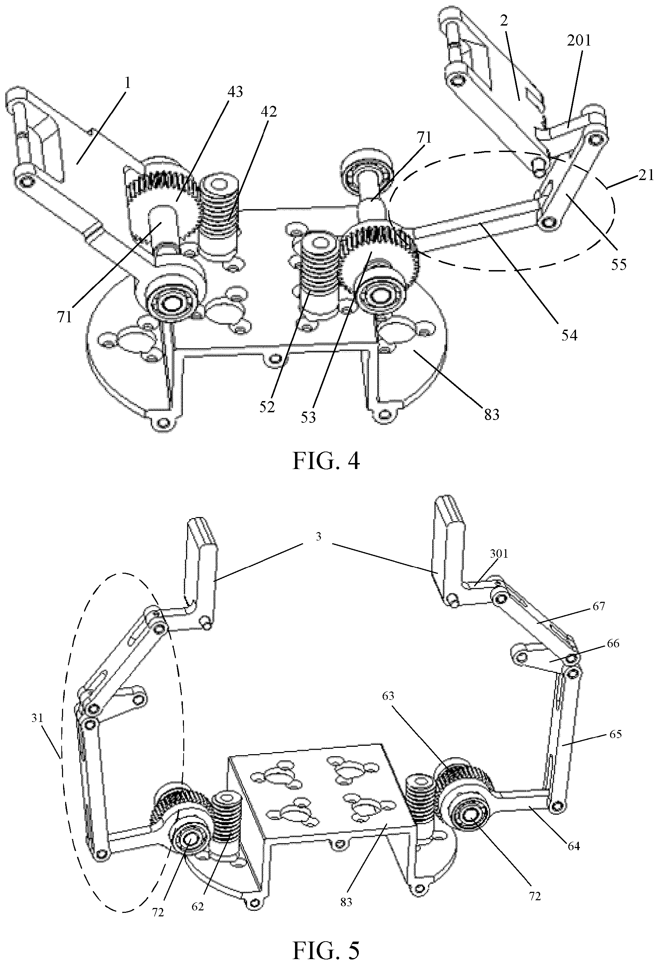

The first transmission assembly 01 is configured to transmit power of the first drive device 41 to the first finger segment 1. Because the first finger segment 1 is close to a palm portion of the manipulator, the constituent member of the first transmission assembly 01 may include simple engaged members. For example, as shown in FIG. 4, a left side of FIG. 4 shows a specific connection manner of the first finger segment 1 and the first transmission assembly 01.

For example, as shown in FIG. 4, the first transmission assembly 01 includes a first worm 42, a first worm gear 43, and a first rotating shaft (equivalent to a fourth rotating shaft 71, and replaced by the fourth rotating shaft 71 in the following). For example, a bottom portion of the first worm 42 is fixedly connected to the first drive device 41, and the first worm 42 is engaged with the first worm gear 43, so that the first drive device 41 drives the first worm 42 to rotate to drive the first worm gear 43 to rotate. For example, the first worm 42 is fixedly connected to the first drive device 41 located below the fixed plate 83 through a through hole in the fixed plate 83, and gear teeth of the first worm gear 43 are engaged with threads of the first worm 42. For example, the first worm gear 43 is movably sleeved on the fourth rotating shaft 71, and the first worm gear 43 is fixedly connected to the bottom portion of the first finger segment 1. For example, the first worm gear 43 is movably sleeved on the fourth rotating shaft 71. The first worm gear 43 is coaxially connected to a hole in the bottom portion of the first finger segment 1. A diameter of the hole in the bottom portion of the first finger segment 1 is the same as a diameter of the fourth rotating shaft 71.

The working principle of driving the first finger segment 1 by the first transmission assembly 01 is as follows:
The first drive device 41 provides power and is fixedly connected to the first worm 42 through the first drive device 41 to drive the first worm 42 to rotate. Because the first worm gear 43 is engaged with the first worm 42, the first worm gear 43 is movably sleeved on the fourth rotating shaft 71, and the first worm gear 43 is fixedly connected to the bottom portion of the first finger segment 1, the drive power can be transmitted to the first finger segment 1 through the worm and gear mechanism to implement the driving of the first finger segment 1 by the first drive device 41.

The second transmission assembly 02 is configured to transmit power of the second drive device 51 to the second finger segment 2. Because the second finger segment 2 is located in a middle position of the mechanical finger 10, the second transmission assembly 02 needs to use a simple connecting rod assembly to implement power transmission. For example, as shown in FIG. 4, a right side of FIG. 4 shows a specific connection manner of the second finger segment 2 and the second transmission assembly 02.

For example, as shown in FIG. 4, the second transmission assembly 02 includes a second worm 52, a second worm gear 53, a second rotating shaft (equivalent to a fourth rotating shaft 71, and replaced by the fourth rotating shaft 71 in the following), and a connecting rod assembly 21. For example, a bottom portion of the second worm 52 is fixedly connected to the second drive device 51, and the second worm 52 is engaged with the second worm gear 53, so that the second drive device 51 drives the second worm 52 to rotate to drive the second worm gear 53 to rotate. For example, the second worm 52 is fixedly connected to the second drive device 51 located below the fixed plate 83 through a through hole in the fixed plate 83, and gear teeth of the second worm gear 53 are engaged with threads of the second worm 52. For example, the second worm gear 53 is movably sleeved on the fourth rotating shaft 71. For example, a bottom portion of the connecting rod assembly 21 is fixedly connected to the second worm gear 53, and a top portion of the connecting rod assembly 21 is movably connected to a drive rod 201 extending from the bottom portion of the second finger segment 2 to a rear face of the manipulator.

For example, there are various combination implementations for the connecting rod assembly 21. This is not limited herein in this application. For example, this embodiment of this application provides an exemplary implementation of the connecting rod assembly 21: The connecting rod assembly 21 includes a connecting rod 54 and a connecting rod 55. For example, a bottom portion of the connecting rod 54 is movably sleeved on the fourth rotating shaft 71 and is fixedly connected to the second worm gear 53. A top portion of the connecting rod 54 is movably connected to a bottom portion of the connecting rod 55, and a top portion of the connecting rod 55 is movably connected to a drive rod 201 extending from the bottom portion of the second finger segment 2 to a rear face of the manipulator. For example, there are various implementations of connecting the connecting rod 54, the connecting rod 55, and their surrounding components. This is not limited herein in this application. For example, two ends of the connecting rod 54 are each provided with a hole, two ends of the connecting rod 55 are each provided with two holes, and an end of the drive rod 201 is provided with a hole. For example, a hole in the bottom portion of the connecting rod 54 changes with a diameter of the fourth rotating shaft 71. A column pin sequentially passes through the hole in the bottom portion of the connecting rod 55 and the hole in the top portion of the connecting rod 54 to movably connect the holes. The column pin sequentially passes through the hole in the top portion of the connecting rod 55 and the hole at the end of the drive rod 201 to movably connect the holes.

The working principle of driving the second finger segment 2 by the second transmission assembly 02 is as follows:
The second drive device 51 provides power and is fixedly connected to the second worm 52 through the second drive device 51 to drive the second worm 52 to rotate. Because the second worm gear 53 is engaged with the second worm 52, the second worm gear 53 is movably sleeved on the fourth rotating shaft 71, the bottom portion of the connecting rod 54 is fixedly connected to the second worm gear 53, the drive power is transmitted to the connecting rod 54 through the worm and gear mechanism, and the power is transmitted to the second finger segment 2 through the movable connection of the connecting rod 54, the connecting rod 55, and the second finger segment 2, thereby implement the driving of the second finger segment 2 by the second drive device 51.

The third transmission assembly 03 is configured to transmit power to the third finger segment 3 through the third drive device 61. Because the third finger segment 3 is located at an end of the mechanical finger 10 and distant from the corresponding finger driving assembly 20, the third transmission assembly 03 needs to use a relatively complex connecting rod structure to implement power transmission.

For example, FIG. 5 shows a specific connection manner of the third finger segment 3 and the third transmission assembly 03. The third transmission assembly 03 includes a third worm 62, a third worm gear 63, a third rotating shaft (equivalent to a fifth rotating shaft 72, and replaced by the fifth rotating shaft 72 in the following), and a connecting rod mechanism 31. For example, a bottom portion of the third worm 62 is fixedly connected to the third drive device 61, and the third worm 62 is engaged with the third worm gear 63, so that the third drive device 61 drives the third worm 62 to rotate to drive the third worm gear 63 to rotate. For example, the third worm 62 is fixedly connected to the third drive device 61 located below the fixed plate 83 through a through hole in the fixed plate 83, and gear teeth of the third worm gear 63 are engaged with threads of the third worm 62. For example, the third worm gear 63 is movably sleeved on the fifth rotating shaft 72. For example, a bottom portion of the connecting rod mechanism 31 is fixedly connected to the third worm gear 63, a middle portion of the connecting rod mechanism 31 is movably connected to the bottom portion of the second finger segment 2, and a top portion of the connecting rod mechanism 31 is movably connected to a drive rod 301 extending from the bottom portion of the third finger segment 3 to a rear face of the manipulator.

For example, there are various combination implementations for the connecting rod mechanism 31. This is not limited herein in this application. For example, this embodiment of this application provides an exemplary implementation of the connecting rod mechanism 31: The connecting rod mechanism 31 includes a connecting rod 64, a connecting rod 65, a connecting rod 66, and a connecting rod 67. For example, two ends of the connecting rod 64 are each provided with a hole, two ends of the connecting rod 65 are each provided with two holes, the connecting rod 66 has a first end provided with a hole and a second end provided with two holes, and two ends of the connecting rod 67 are each provided with two holes. For example, a hole in a bottom portion of the connecting rod 64 is movably sleeved on the fifth rotating shaft 72 and is fixedly connected to the third worm gear 63. A column pin sequentially passes through the hole in the top portion of the connecting rod 64 and the hole in the bottom portion of the connecting rod 65 to movably connect the holes. The column pin sequentially passes through the hole in the top portion of the second finger segment 2 and the hole at the first end of the connecting rod 66 to movably connect the holes, for supporting the second finger segment 2 and ensuring that the second finger segment 2 is not affected by the power of the third drive device 61. The column pin is sequentially movably connected to the hole in the top portion of the connecting rod 65 and the hole in the bottom portion of the connecting rod 67 through two holes on a right side of the connecting rod 66. The column pin passes through the hole in the top portion of the connecting rod 67 to be movably connected to the drive rod 301 extending from the bottom portion of the third finger segment 3 to the rear face of the manipulator. For example, the connecting rod 66 is an intermediate connecting rod. The connecting rod 66, the connecting rod 67, the drive rod 301, and the second finger segment 2 form a parallelogram. For example, the connecting rod 65 drives the connecting rod 66, that is, the connecting rod 65 drives one side of the parallelogram to drive the drive rod 301 to move, thereby driving the third finger segment 3.

The working principle of driving the third finger segment 3 by the third transmission assembly 03 is as follows:
The third drive device 61 provides power and is fixedly connected to the third worm 62 through the third drive device 61 to drive the third worm 62 to rotate. Because the third worm gear 63 is engaged with the third worm 62, the third worm gear 63 is movably sleeved on the fifth rotating shaft 72, the bottom portion of the connecting rod 64 is fixedly connected to the third worm gear 63, the drive power is transmitted to the connecting rod 64 through the worm and gear mechanism, and the drive power is sequentially transmitted through the connecting rod mechanism 31 including the connecting rod 64, the connecting rod 65, the connecting rod 66, and the connecting rod 67. Finally, the power is transmitted to the third finger segment 3 through movable connection of the top portion of the connecting rod 67 and the third finger segment 3, thereby implementing the driving of the third finger segment 3 by the third drive device 61.

For example, the first rotating shaft, the second rotating shaft, and the third rotating shaft may be the same rotating shaft or different rotating shafts. This is not limited herein in this application. For example, the first rotating shaft and the second rotating shaft are the same rotating shaft, and the third rotating shaft is another rotating shaft. For another example, the first rotating shaft is one rotating shaft, and the second rotating shaft and the third rotating shaft are another shared rotating shaft.

For example, this embodiment of this application provides an exemplary optional manner of the three rotating shafts, and details are as follows:
In the manipulator provided in this embodiment of this application, the first transmission assembly 01 includes a first worm 42 and a first worm gear 43, the second transmission assembly 02 includes a second worm 52, a second worm gear 53, and a connecting rod assembly 21, and the first transmission assembly 01 and the second transmission assembly 02 share a fourth rotating shaft 71.

For example, as shown in FIG. 3, the first transmission assembly 01 and the second transmission assembly 02 share the fourth rotating shaft 71, and the third transmission assembly 03 uses a fifth rotating shaft 72, that is, the first rotating shaft and the second rotating shaft are the same rotating shaft (that is, the fourth rotating shaft 71), and the third rotating shaft is another rotating shaft (that is, the fifth rotating shaft 72).

For example, as shown in FIG. 3, a bottom portion of the first worm 42 is fixedly connected to the first drive device 41, the first worm 42 is engaged with the first worm gear 43, the first worm gear 43 is movably sleeved on a first end of the fourth rotating shaft 71, and the first worm gear 43 is fixedly connected to the bottom portion of the first finger segment 1. For example, a bottom portion of the second worm 52 is fixedly connected to the second drive device 51, the second worm 52 is engaged with the second worm gear 53, the second worm gear 53 is movably sleeved on a second end of the fourth rotating shaft 71, a bottom portion of the connecting rod assembly 21 is fixedly connected to the second worm gear 53, and a top portion of the connecting rod assembly 21 is movably connected to a drive rod 201 extending from the bottom portion of the second finger segment 2 to a rear face of the manipulator.

For example, according to the foregoing optional manner, the first end of the fourth rotating shaft 71 is movably connected to the first worm gear 43, and the second end of the fourth rotating shaft 71 is movably connected to the second worm gear 53. For example, the bottom portion of the first finger segment 1 is sleeved on the fourth rotating shaft 71, and the bottom portion of the first finger segment 1 includes a first hole and a second hole. The first hole is fixedly connected to the first worm gear 43. The second hole is movably connected to the second worm gear 53. In this case, rotation of the second worm gear 53 does not affect rotation of the first finger segment 1, that is, the second worm gear 53 does not provide drive power for the first finger segment 1, and only the first worm gear 43 provides drive power for the first finger segment 1.

For example, the fourth rotating shaft 71 and the fifth rotating shaft 72 each include a rotating shaft and a bearing. For example, the first worm gear 43 is movably sleeved on a first end of the rotating shaft of the fourth rotating shaft 71, the second worm gear 53 is movably sleeved on a second end of the rotating shaft of the fourth rotating shaft 71, the third transmission assembly 03 is fixedly sleeved on the rotating shaft of the fifth rotating shaft 72, and the bearing is used for supporting and fixing the rotating shaft.

In summary, for the manipulator provided in this embodiment of this application, drive power is transmitted from a drive device to each finger segment through a transmission component including a worm and gear mechanism, so that the each finger segment has a degree of freedom, thereby enabling the manipulator to be more flexible during movement. In addition, sharing a fourth rotating shaft 71 by a first transmission assembly 01 and a second transmission assembly 02 simplifies a structure of the manipulator while ensuring flexibility of the manipulator, so that lightness of the manipulator can be well ensured.

Because the finger segments each have their respective degrees of freedom, the manipulator provided in the foregoing embodiment of this application not only can ensure a relatively large gripping force and relatively strong operability, but also can implement various motion modes for article clamping. This improves self-adaptation of the manipulator to an article to be clamped, thereby enabling the manipulator to implement various autonomous motion modes. The motion mode of the manipulator includes, but is not limited to, at least one of a flat clamping motion mode, an enveloping clamping motion mode, and a rubbing motion mode.

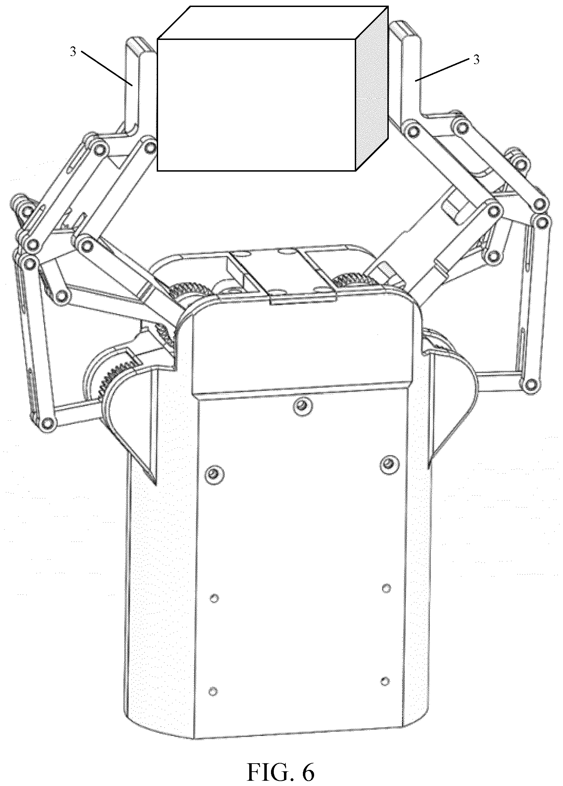

For example, that the mechanical finger 10 includes the first mechanical finger 11 and the second mechanical finger 12 is used as an example, clamping an article is used as an example. This embodiment of this application provides three motion modes of the manipulator. A first motion mode is a flat clamping motion mode, a second motion mode is an enveloping clamping motion mode, and a third motion mode is a rubbing motion mode, respectively shown in FIG. 6 to FIG. 8.

### For the flat clamping motion mode:

The flat clamping motion mode is applicable to clamping of a regular article, including but not limited to: at least one of an angular article or an article with relatively parallel planes. For example, as shown in FIG. 6, the working principle of the flat clamping motion mode is as follows:

The finger driving assembly 20 provides power and drives, through the first transmission assemblies 01, the second transmission assemblies 02, and the third transmission assemblies 03, the two groups of finger segments respectively corresponding to the first mechanical finger 11 and the second mechanical finger 12 to collaboratively move, so that finger pulp surfaces of the two third finger segments 3 are parallel to each other and then simultaneously move in a clamping direction, until coming into contact with an article to be clamped.

### For the enveloping clamping motion mode:

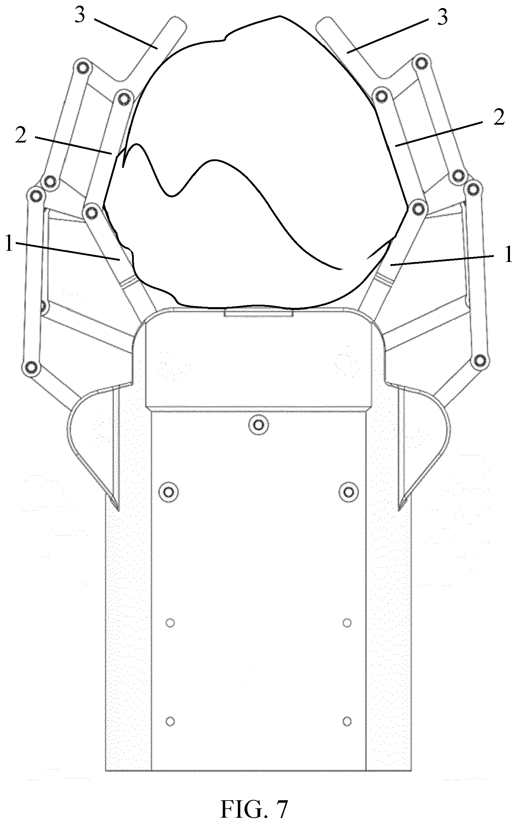

The enveloping clamping motion mode is applicable to clamping an irregular article, such as a spherical article, for example, a sphere or a stone. For example, as shown in FIG. 7, clamping a stone is used as an example. The working principle of the enveloping clamping motion mode is as follows:

The first drive device 41 provides power and drives, through the first transmission assemblies 01, the first finger segments 1 of the first mechanical finger 11 and the second mechanical finger 12 to move relative to each other, until the first finger segments 1 come into contact with a surface of the stone or reach a rotation limit of the first finger segments 1, and at this time, the first drive device 41 stops providing power for the first finger segments 1. Then, the second drive device 51 provides power and drives, through the second transmission assemblies 02, the second finger segments 2 of the first mechanical finger 11 and the second mechanical finger 12 to move relative to each other, until the second finger segments 2 come into contact with the surface of the stone or reach a rotation limit of the second finger segments 2, and at this time, the second drive device 51 stops providing power for the second finger segments 2. Finally, the third drive device 61 provides power and drives, through the third transmission assemblies 03, the third finger segments 3 of the first mechanical finger 11 and the second mechanical finger 12 to move relative to each other, until the third finger segments 3 come into contact with the surface of the stone or reach a rotation limit of the third finger segments 3, thereby implementing enveloping clamping of the article to be clamped.

In the foregoing process, the first drive device 41, the second drive device 51, and the third drive device 61 may alternatively simultaneously provide power, and an order of the power provision is not specifically limited, provided that the enveloping clamping motion mode can be achieved. This is not limited herein in this application.

### For the rubbing motion mode:

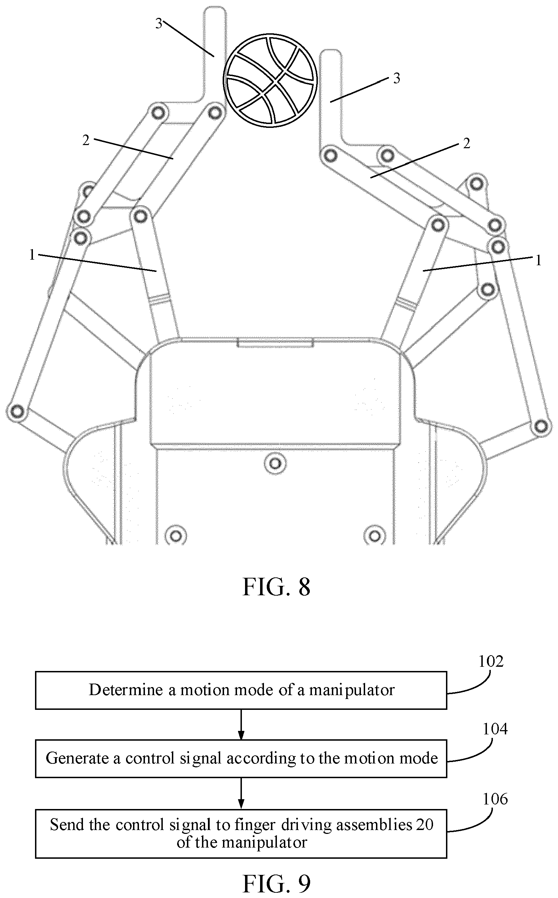

The rubbing motion mode is a relatively complex motion mode, applicable to a working state in which mechanical fingers move in different directions, such as twisting off a bottle cap. For example, as shown in FIG. 8, the working principle of the rubbing motion mode is as follows:

The finger driving assembly 20 provides power and transmits the drive power to the first finger segments 1, the second finger segments 2, and the third finger segments 3 through the first transmission assemblies 01, the second transmission assemblies 02, and the third transmission assemblies 03, to drive the plurality of finger segments to collaboratively move, so that finger pulp surfaces of the two third finger segments 3 are parallel to each other and then simultaneously move in a clamping direction to come into contact with an article to be clamped, that is, the two third finger segments 3 come into contact with two sides of a bottle cap. Then, the first mechanical finger 11 and the finger driving assembly 20 corresponding thereto collaborate on driving, and transmit the power through the three groups of transmission assemblies, so that the three finger segments of the first mechanical finger 11 simultaneously move upward. In addition, the second mechanical finger 12 and the finger driving assembly 20 corresponding thereto collaborate on driving, and transmit the power through the three groups of transmission assemblies, so that the three finger segments of the second mechanical finger 12 simultaneously move downward. When the third finger segments 3 of the first mechanical finger 11 and the second mechanical finger 12 are about to be detached from the article, the finger driving assemblies 20 corresponding to the first mechanical finger 11 and the second mechanical finger 12 stop providing the power. Subsequently, the first mechanical finger 11 and the second mechanical finger 12 and the finger driving assemblies 20 corresponding thereto simultaneously collaborate on driving in opposite directions, that is, at the same time point, the three finger segments of the first mechanical finger 11 simultaneously move downward, and the three finger segments of the second mechanical finger 12 simultaneously move upward. Repeating the foregoing steps a plurality of times can implement the rubbing of the article.

According to one aspect, an embodiment of this application provides a robot. The robot includes the manipulator described above, and a specific structure is not described again. The robot including the manipulator described above can implement various motion modes, including but not limited to at least one of a flat clamping motion mode, an enveloping clamping motion mode, and a rubbing motion mode. For example, after the manipulator flatly clamps an article to be clamped, the robot transports the article to a target location. For another example, after the manipulator twists off a bottle cap, the robot places the bottle cap at a specified location.

According to one aspect, an embodiment of this application provides a manipulator driving method, performed by a server, configured to control the manipulator described above. As shown in a flowchart of a manipulator driving method shown in FIG. 9, the method includes:
**Step 102:** Determine a motion mode of the manipulator.

For example, the motion mode refers to a changing manner of a mechanical finger of the manipulator, including but not limited to: at least one of a flat clamping motion mode, an enveloping clamping motion mode, and a rubbing motion mode.

In this embodiment of this application, for example, the server is a control center for controlling the manipulator.

For example, there are various methods for determining the motion mode of the manipulator, including but not limited to: An operator instantly enters code of a motion mode to the control center, and the control center determines the motion mode corresponding to the code after identifying the entered code. Alternatively, an operator presets the motion mode of the manipulator. For example, there are three motion modes of the manipulator, including a flat clamping motion mode, an enveloping clamping motion mode, and a rubbing motion mode. The control center predicts a trend of change of the mechanical finger according to an article to be clamped, and determines a corresponding motion mode according to the trend of change.

### Step 104: Generate a control signal according to the motion mode.

For example, the control signal is generated by the control center, for implementing an instruction on a specific movement of clamping an article by the manipulator. For example, the generation of the control signal may be set according to the motion mode or according to different finger segments of the mechanical finger. This is not limited herein in this application.

**Step 106:** Send the control signal to the finger driving assemblies 20 of the manipulator.

For example, after receiving the control signal sent by the control center, the manipulator drives, according to the control signal, a related finger segment to move to complete the instruction in the determined motion mode.

For example, that the mechanical finger 10 includes a first mechanical finger 11 and a second mechanical finger 12 is used as an example, and the first mechanical finger 11 and the second mechanical finger 12 each include three finger segments, which are respectively a first finger segment 1, a second finger segment 2, and a third finger segment 3.

According to different motion modes, step 106 may be implemented in the following three manners:

### Optional manner 1:

The motion mode includes a flat clamping motion mode, and step 106 includes two sub-steps, which are respectively as follows.

Sub-step 1: Send a first alignment signal, a second alignment signal, and a third alignment signal to the finger driving assembly 20 corresponding to the first mechanical finger 11, and send the first alignment signal, the second alignment signal, and the third alignment signal to the finger driving assembly 20 corresponding to the second mechanical finger 12.

For example, the first alignment signal, the second alignment signal, and the third alignment signal are used for respectively driving the first finger segment 1, the second finger segment 2, and the third finger segment 3 of the first mechanical finger 11 to collaboratively perform an alignment movement. For example, the alignment movement is a movement that causes a finger pulp surface of the third finger segment 3 of the first mechanical finger 11 and a finger pulp surface of the third finger segment 3 of the second mechanical finger 12 to remain parallel to each other. For example, the finger pulp surface of the third finger segment 3 of the first mechanical finger 11 and the finger pulp surface of the third finger segment 3 of the second mechanical finger 12 are rotated and adjusted to reach a parallel state.

Sub-step 2: Send a first translation signal, a second translation signal, and a third translation signal to the finger driving assembly 20 corresponding to the first mechanical finger 11, and send the first translation signal, the second translation signal, and the third translation signal to the finger driving assembly 20 corresponding to the second mechanical finger 12.

For example, the first translation signal, the second translation signal, and the third translation signal are used for respectively driving the first finger segment 1, the second finger segment 2, and the third finger segment 3 of the first mechanical finger 11 to collaboratively perform a translation motion. For example, the translation motion is a movement that causes a finger pulp surface of the third finger segment 3 of the first mechanical finger 11 and a finger pulp surface of the third finger segment 3 of the second mechanical finger 12 to move in a clamping direction.

### Optional manner 2:

The motion mode includes an enveloping clamping mode, and step 106 includes the following alternative steps: sending a first rotation signal, a second rotation signal, and a third rotation signal to the finger driving assembly 20 corresponding to the first mechanical finger 11, and sending the first rotation signal, the second rotation signal, and the third rotation signal to the finger driving assembly 20 corresponding to the second mechanical finger 12.

For example, the first rotation signal, the second rotation signal, and the third rotation signal are used for respectively driving the first finger segment 1, the second finger segment 2, and the third finger segment 3 of the first mechanical finger 11 to collaboratively perform a rotation motion. For example, the rotation motion is a movement that causes a finger pulp surface of each of the first finger segment 1, the second finger segment 2, and the third finger segment 3 of each of the first mechanical finger 11 and the second mechanical finger 12 to move in a clamping direction with the bottom portion of the first finger segment 1 as a support, that is, the first mechanical finger 11 and the second mechanical finger 12 move in the clamping direction with the bottom portion of the first finger segment 1 as a support.

For example, the first rotation signal, the second rotation signal, and the third rotation signal may be sent simultaneously or not. This is not limited herein in this application. For example, clamping an article is used as an example, and the first drive device 41 drives, through the first transmission assemblies 01, the first finger segments 1 of the first mechanical finger 11 and the second mechanical finger 12 to move simultaneously toward an article to be clamped, with the bottom portion of the first finger segment 1 as a support. After the first finger segment 1 comes into contact with the article to be clamped or reaches a rotation limit of the first finger segment 1, the first drive device 41 stops driving the first finger segment 1. The second drive device 51 drives, through the second transmission assemblies 02, the second finger segments 2 of the first mechanical finger 11 and the second mechanical finger 12 to move simultaneously toward the article to be clamped, with the bottom portion of the second finger segment 2 as a support. After the second finger segment 2 comes into contact with the article to be clamped or reaches a rotation limit of the second finger segment 2, the second drive device 51 stops driving the second finger segment 2. The third drive device 61 drives, through the third transmission assemblies 03, the third finger segments 3 of the first mechanical finger 11 and the second mechanical finger 12 to simultaneously move toward the article to be clamped, with the bottom portion of the third finger segment 3 as a support. After the third finger segment 3 comes into contact with the article to be clamped, the third drive device 61 stops driving the third finger segment 3. For example, the first drive device 41, the second drive device 51, and the third drive device 61 may provide power simultaneously or not.

### Optional manner 3:

The motion mode includes a rubbing motion mode, and step 106 includes three sub-steps, which are respectively as follows.

Sub-step 1 and sub-step 2 are the same as the two sub-steps in the flat clamping motion mode, and details are not described herein again.

Sub-step 3: Send a first rubbing signal, a second rubbing signal, and a third rubbing signal to the finger driving assembly 20 corresponding to the first mechanical finger 11, and send the first rubbing signal, the second rubbing signal, and the third rubbing signal to the finger driving assembly 20 corresponding to the second mechanical finger 12.

For example, the first rubbing signal, the second rubbing signal, and the third rubbing signal are used for respectively driving the first finger segment 1, the second finger segment 2, and the third finger segment 3 of the first mechanical finger 11 to collaboratively perform a rubbing motion. For example, the rubbing motion is a movement that causes the third finger segment 3 of the first mechanical finger 11 to move in a first direction and causes the third finger segment 3 of the second mechanical finger 12 to move in a second direction. For example, the first direction and the second direction are two opposite directions parallel to the finger pulp surface.

For example, sub-step 3 is performed at least once, and the number of times of performing sub-step 3 is subject to a case that a rubbing effect is reached. This is not limited herein in this application. For example, clamping an article is used as an example. The third drive device 61 drives, through the third transmission assemblies 03, the third finger segments 3 of the first mechanical finger 11 and the second mechanical finger 12 to move up and down within planes of their finger pulp surfaces, thereby implementing the rubbing motion mode. Moving tracks of the two third finger segments 3 are distributed centrally symmetrically.

In summary, an embodiment of this application provides a manipulator driving method, and a control signal corresponding to a motion mode is sent to a finger driving assembly of a manipulator to implement control of the manipulator, thereby driving the manipulator to perform a corresponding movement.

The following is an apparatus embodiment of this application. For details not described in detail in the apparatus embodiment, reference may be made to corresponding record in the foregoing method embodiments. Details are not described herein again.

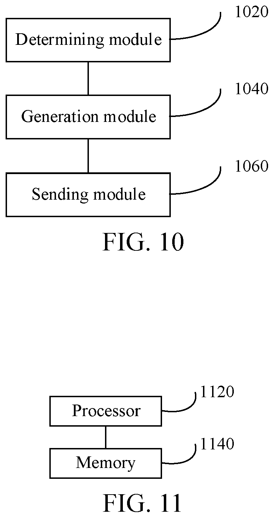

An embodiment of this application provides a manipulator driving device. For example, FIG. 10 is a schematic structural diagram of the apparatus. The apparatus may be implemented as an entire terminal or a part of a terminal by using software, hardware, or a combination thereof. The apparatus includes: a determining module 1020, a generation module 1040, and a sending module 1060.

The determining module 1020 is configured to determine a motion mode of a manipulator. The motion mode includes at least one of a flat clamping motion mode, an enveloping clamping motion mode, and a rubbing motion mode.

The generation module 1040 is configured to generate a control signal according to the motion mode.

The sending module 1060 is configured to send the control signal to a finger driving assembly 20 of the manipulator.

In an optional embodiment, the sending module 1060 is further configured to:
send a first alignment signal, a second alignment signal, and a third alignment signal to the finger driving assembly 20 corresponding to the first mechanical finger 11, and send the first alignment signal, the second alignment signal, and the third alignment signal to the finger driving assembly 20 corresponding to the second mechanical finger 12, the first alignment signal, the second alignment signal, and the third alignment signal being used for respectively driving the first finger segment 1, the second finger segment 2, and the third finger segment 3 of the first mechanical finger 11 to collaboratively perform an alignment movement, and the alignment movement being a movement that causes a finger pulp surface of the third finger segment 3 of the first mechanical finger 11 and a finger pulp surface of the third finger segment 3 of the second mechanical finger 12 to remain parallel to each other; and
send a first translation signal, a second translation signal, and a third translation signal to the finger driving assembly 20 corresponding to the first mechanical finger 11, and send the first translation signal, the second translation signal, and the third translation signal to the finger driving assembly 20 corresponding to the second mechanical finger 12, the first translation signal, the second translation signal, and the third translation signal being used for respectively driving the first finger segment 1, the second finger segment 2, and the third finger segment 3 of the first mechanical finger 11 to collaboratively perform a translation motion, and the translation motion being a movement that causes a finger pulp surface of the third finger segment 3 of the first mechanical finger 11 and a finger pulp surface of the third finger segment 3 of the second mechanical finger 12 to move in a clamping direction.

In an optional embodiment, the sending module 1060 is further configured to:
send a first rotation signal, a second rotation signal, and a third rotation signal to the finger driving assembly 20 corresponding to the first mechanical finger 11, and send the first rotation signal, the second rotation signal, and the third rotation signal to the finger driving assembly 20 corresponding to the second mechanical finger 12, the first rotation signal, the second rotation signal, and the third rotation signal being used for respectively driving the first finger segment 1, the second finger segment 2, and the third finger segment 3 of the first mechanical finger 11 to collaboratively perform a rotation motion, and the rotation motion being a movement that causes a finger pulp surface of each of the first finger segment 1, the second finger segment 2, and the third finger segment 3 of each of the first mechanical finger 11 and the second mechanical finger 12 to move in a clamping direction with the bottom portion of the first finger segment 1 as a support.

In an optional embodiment, the sending module 1060 is further configured to:
send a first alignment signal, a second alignment signal, and a third alignment signal to the finger driving assembly 20 corresponding to the first mechanical finger 11, and send the first alignment signal, the second alignment signal, and the third alignment signal to the finger driving assembly 20 corresponding to the second mechanical finger 12, the first alignment signal, the second alignment signal, and the third alignment signal being used for respectively driving the first finger segment 1, the second finger segment 2, and the third finger segment 3 of the first mechanical finger 11 to collaboratively perform an alignment movement, and the alignment movement being a movement that causes a finger pulp surface of the third finger segment 3 of the first mechanical finger 11 and a finger pulp surface of the third finger segment 3 of the second mechanical finger 12 to remain parallel to each other;
send a first translation signal, a second translation signal, and a third translation signal to the finger driving assembly 20 corresponding to the first mechanical finger 11, and send the first translation signal, the second translation signal, and the third translation signal to the finger driving assembly 20 corresponding to the second mechanical finger 12, the first translation signal, the second translation signal, and the third translation signal being used for respectively driving the first finger segment 1, the second finger segment 2, and the third finger segment 3 of the first mechanical finger 11 to collaboratively perform a translation motion, and the translation motion being a movement that causes a finger pulp surface of the third finger segment 3 of the first mechanical finger 11 and a finger pulp surface of the third finger segment 3 of the second mechanical finger 12 to move in a clamping direction; and
send a first rubbing signal, a second rubbing signal, and a third rubbing signal to the finger driving assembly 20 corresponding to the first mechanical finger 11, and send the first rubbing signal, the second rubbing signal, and the third rubbing signal to the finger driving assembly 20 corresponding to the second mechanical finger 12, the first rubbing signal, the second rubbing signal, and the third rubbing signal being used for respectively driving the first finger segment 1, the second finger segment 2, and the third finger segment 3 of the first mechanical finger 11 to collaboratively perform a rubbing motion, and the rubbing motion being a movement that causes the third finger segment 3 of the first mechanical finger 11 to move in a first direction and causes the third finger segment 3 of the second mechanical finger 12 to move in a second direction, and the first direction and the second direction being two opposite directions parallel to the finger pulp surface.

Exemplarily, as shown in FIG. 11, this application further provides a computer device. The computer device includes: a processor 1120 and a memory 1140.

Exemplarily, the memory 1140 stores at least one instruction, at least one program, a code set, or an instruction set, the at least one instruction, the at least one program, the code set, or the instruction set being loaded and executed by the processor 1120 to implement the manipulator driving method provided in the above method embodiments.

This application further provides a computer-readable storage medium, the storage medium storing at least one instruction, at least one program, a code set or an instruction set, the at least one instruction, the at least one program, the code set or the instruction set being loaded and executed by a processor to implement the manipulator driving method provided in the above method embodiments.

This application further provides a computer program product or a computer program. The computer program product or the computer program includes computer instructions, and the computer instructions are stored in a computer-readable storage medium. A processor of a computer device reads the computer instructions from the computer-readable storage medium and executes the computer instructions to cause the computer device to implement the manipulator driving method provided in the above method embodiments.

This application further provides a chip. The chip includes a programmable logic circuit or a program, and the chip is configured to implement the manipulator driving method described above.

The terms "first" and "second" in this application are used for descriptive purposes only and should not be construed as indicating or implying relative importance or implicitly indicating the number of technical features indicated.

All the foregoing optional technical solutions may be arbitrarily combined to form an optional embodiment of this application, and details are not described herein again.

The foregoing descriptions are merely optional embodiments of this application, but are not intended to limit this application. Any modification, equivalent replacement, or improvement made within the spirit and principle of this application shall fall within the protection scope of this application.

## Claims

1. A manipulator, comprising: at least two mechanical fingers (10) and a finger driving assembly (20) corresponding to each of the mechanical fingers (10);
the mechanical finger (10) comprising a first finger segment (1), a second finger segment (2), and a third finger segment (3);
a bottom portion of the third finger segment (3) being movably connected to a top portion of the second finger segment (2), and a bottom portion of the second finger segment (2) being movably connected to a top portion of the first finger segment (1);
the finger driving assembly (20) comprising a first drive device (41) for driving the first finger segment (1), a second drive device (51) for driving the second finger segment (2), and a third drive device (61) for driving the third finger segment (3); and
the first drive device (41) being movably connected to the first finger segment (1) through a first transmission assembly (01), the second drive device (51) being movably connected to the second finger segment (2) through a second transmission assembly (02), and the third drive device (61) being movably connected to the third finger segment (3) through a third transmission assembly (03).

2. The manipulator according to claim 1, wherein the first transmission assembly (01) comprises a first worm (42), a first worm gear (43), and a first rotating shaft;
a bottom portion of the first worm (42) is fixedly connected to the first drive device (41), and the first worm (42) is engaged with the first worm gear (43); and
the first worm gear (43) is movably sleeved on the first rotating shaft, and the first worm gear (43) is fixedly connected to a bottom portion of the first finger segment (1).

3. The manipulator according to claim 1, wherein the second transmission assembly (02) comprises a second worm (52), a second worm gear (53), a second rotating shaft, and a connecting rod assembly (21);
a bottom portion of the second worm (52) is fixedly connected to the second drive device (51), and the second worm (52) is engaged with the second worm gear (53);
the second worm gear (53) is movably sleeved on the second rotating shaft; and
a bottom portion of the connecting rod assembly (21) is fixedly connected to the second worm gear (53), and a top portion of the connecting rod assembly (21) is movably connected to a drive rod (201) extending from the bottom portion of the second finger segment (2) to a rear face of the manipulator.

4. The manipulator according to claim 1, wherein the third transmission assembly (03) comprises a third worm (62), a third worm gear (63), a third rotating shaft, and a connecting rod mechanism (31);
a bottom portion of the third worm (62) is fixedly connected to the third drive device (61), and the third worm (62) is engaged with the third worm gear (63);
the third worm gear (63) is movably sleeved on the third rotating shaft; and
a bottom portion of the connecting rod mechanism (31) is fixedly connected to the third worm gear (63), a middle portion of the connecting rod mechanism (31) is movably connected to the bottom portion of the second finger segment (2), and a top portion of the connecting rod mechanism (31) is movably connected to a drive rod (301) extending from the bottom portion of the third finger segment (3) to a rear face of the manipulator.

5. The manipulator according to claim 1, wherein the first transmission assembly (01) comprises a first worm (42) and a first worm gear (43), the second transmission assembly (02) comprises a second worm (52), a second worm gear (53), and a connecting rod assembly (21), and the first transmission assembly (01) and the second transmission assembly (02) share a fourth rotating shaft (71);
a bottom portion of the first worm (42) is fixedly connected to the first drive device (41), the first worm (42) is engaged with the first worm gear (43), the first worm gear (43) is movably sleeved on a first end of the fourth rotating shaft (71), and the first worm gear (43) is fixedly connected to a bottom portion of the first finger segment (1); and
a bottom portion of the second worm (52) is fixedly connected to the second drive device (51), the second worm (52) is engaged with the second worm gear (53), the second worm gear (53) is movably sleeved on a second end of the fourth rotating shaft (71), a bottom portion of the connecting rod assembly (21) is fixedly connected to the second worm gear (53), and a top portion of the connecting rod assembly (21) is movably connected to a drive rod (201) extending from the bottom portion of the second finger segment (2) to a rear face of the manipulator.

6. The manipulator according to claim 5, wherein
the fourth rotating shaft (71) comprises a rotating shaft and a bearing; and
the first worm gear (43) is movably sleeved on a first end of the rotating shaft, the second worm gear (53) is movably sleeved on a second end of the rotating shaft, and the bearing is used for supporting and fixing the rotating shaft.

7. The manipulator according to claim 1, wherein
the manipulator further comprises a fixed plate (83), the fixed plate (83) is fixedly provided between the mechanical finger (10) and the finger driving assembly (20), and the fixed plate (83) is used for supporting the first transmission assembly (01), the second transmission assembly (02), and the third transmission assembly (03).

8. The manipulator according to claim 7, wherein
the fixed plate (83) is provided with a first through hole, a second through hole, and a third through hole;
the first transmission assembly (01) is fixedly connected to the first drive device (41) through the first through hole;
the second transmission assembly (02) is fixedly connected to the second drive device (51) through the second through hole; and
the third transmission assembly (03) is fixedly connected to the third drive device (61) through the third through hole.

9. The manipulator according to claim 7, wherein the manipulator further comprises a housing (81) and a base (82);
the base (82) is fixedly provided on a bottom portion of the housing (81), and the housing (81) and the base (82) are used for packaging and fixing the finger driving assembly (20), the first transmission assembly (01), the second transmission assembly (02), and the third transmission assembly (03); and
the fixed plate (83) is fixedly provided between the housing (81) and the base (82).

10. The manipulator according to claim 1, wherein
the mechanical finger (10) comprises a first mechanical finger (11) and a second mechanical finger (12); and
a finger pulp of the first mechanical finger (11) faces a finger pulp of the second mechanical finger (12).

11. A robot, comprising the manipulator according to any one of claims 1 to 10.

12. A manipulator driving method, performed by a server, configured to control the manipulator according to any one of claims 1 to 10, the method comprising:
determining a motion mode of the manipulator, the motion mode comprising at least one of a flat clamping motion mode, an enveloping clamping motion mode, and a rubbing motion mode;
generating a control signal according to the motion mode; and
sending the control signal to the finger driving assemblies (20) of the manipulator.

13. The driving method according to claim 12, wherein the manipulator comprises the first mechanical finger (11) and the second mechanical finger (12), and the motion mode comprises the flat clamping motion mode; and
the sending the control signal to the finger driving assemblies (20) of the manipulator comprises:
sending a first alignment signal, a second alignment signal, and a third alignment signal to the finger driving assembly (20) corresponding to the first mechanical finger (11), and sending the first alignment signal, the second alignment signal, and the third alignment signal to the finger driving assembly (20) corresponding to the second mechanical finger (12), the first alignment signal, the second alignment signal, and the third alignment signal being used for respectively driving the first finger segment (1), the second finger segment (2), and the third finger segment (3) of the first mechanical finger (11) to collaboratively perform an alignment movement, and the alignment movement being a movement that causes a finger pulp surface of the third finger segment (3) of the first mechanical finger (11) and a finger pulp surface of the third finger segment (3) of the second mechanical finger (12) to remain parallel to each other; and
sending a first translation signal, a second translation signal, and a third translation signal to the finger driving assembly (20) corresponding to the first mechanical finger (11), and sending the first translation signal, the second translation signal, and the third translation signal to the finger driving assembly (20) corresponding to the second mechanical finger (12), the first translation signal, the second translation signal, and the third translation signal being used for respectively driving the first finger segment (1), the second finger segment (2), and the third finger segment (3) of the first mechanical finger (11) to collaboratively perform a translation motion, and the translation motion being a movement that causes a finger pulp surface of the third finger segment (3) of the first mechanical finger (11) and a finger pulp surface of the third finger segment (3) of the second mechanical finger (12) to move in a clamping direction.

14. The driving method according to claim 12, wherein the manipulator comprises the first mechanical finger (11) and the second mechanical finger (12), and the motion mode comprises the enveloping clamping motion mode; and
the sending the control signal to the finger driving assemblies (20) of the manipulator comprises:
sending a first rotation signal, a second rotation signal, and a third rotation signal to the finger driving assembly (20) corresponding to the first mechanical finger (11), and sending the first rotation signal, the second rotation signal, and the third rotation signal to the finger driving assembly (20) corresponding to the second mechanical finger (12), the first rotation signal, the second rotation signal, and the third rotation signal being used for respectively driving the first finger segment (1), the second finger segment (2), and the third finger segment (3) of the first mechanical finger (11) to collaboratively perform a rotation motion, and the rotation motion being a movement that causes a finger pulp surface of each of the first finger segment (1), the second finger segment (2), and the third finger segment (3) of each of the first mechanical finger (11) and the second mechanical finger (12) to move in a clamping direction with the bottom portion of the first finger segment (1) as a support.

15. The driving method according to claim 12, wherein the manipulator comprises the first mechanical finger (11) and the second mechanical finger (12), and the motion mode comprises the rubbing motion mode; and
the sending the control signal to the finger driving assemblies (20) of the manipulator comprises:
sending a first alignment signal, a second alignment signal, and a third alignment signal to the finger driving assembly (20) corresponding to the first mechanical finger (11), and sending the first alignment signal, the second alignment signal, and the third alignment signal to the finger driving assembly (20) corresponding to the second mechanical finger (12), the first alignment signal, the second alignment signal, and the third alignment signal being used for respectively driving the first finger segment (1), the second finger segment (2), and the third finger segment (3) of the first mechanical finger (11) to collaboratively perform an alignment movement, and the alignment movement being a movement that causes a finger pulp surface of the third finger segment (3) of the first mechanical finger (11) and a finger pulp surface of the third finger segment (3) of the second mechanical finger (12) to remain parallel to each other; and
sending a first translation signal, a second translation signal, and a third translation signal to the finger driving assembly (20) corresponding to the first mechanical finger (11), and sending the first translation signal, the second translation signal, and the third translation signal to the finger driving assembly (20) corresponding to the second mechanical finger (12), the first translation signal, the second translation signal, and the third translation signal being used for respectively driving the first finger segment (1), the second finger segment (2), and the third finger segment (3) of the first mechanical finger (11) to collaboratively perform a translation motion, and the translation motion being a movement that causes a finger pulp surface of the third finger segment (3) of the first mechanical finger (11) and a finger pulp surface of the third finger segment (3) of the second mechanical finger (12) to move in a clamping direction; and
sending a first rubbing signal, a second rubbing signal, and a third rubbing signal to the finger driving assembly (20) corresponding to the first mechanical finger (11), and sending the first rubbing signal, the second rubbing signal, and the third rubbing signal to the finger driving assembly (20) corresponding to the second mechanical finger (12), the first rubbing signal, the second rubbing signal, and the third rubbing signal being used for respectively driving the first finger segment (1), the second finger segment (2), and the third finger segment (3) of the first mechanical finger (11) to collaboratively perform a rubbing motion, the rubbing motion being a movement that causes the third finger segment (3) of the first mechanical finger (11) to move in a first direction and causes the third finger segment (3) of the second mechanical finger (12) to move in a second direction, and the first direction and the second direction being two opposite directions parallel to the finger pulp surface.

16. A manipulator driving apparatus, comprising:
a determining module, configured to determine a motion mode of a manipulator, the motion mode comprising at least one of a flat clamping motion mode, an enveloping clamping motion mode, and a rubbing motion mode;
a generation module, configured to generate a control signal according to the motion mode; and
a sending module, configured to send the control signal to the finger driving assembly (20) of the manipulator.

17. A computer device, comprising a processor and a memory, the memory storing at least one instruction, at least one program, a code set, or an instruction set, the at least one instruction, and the at least one program, the code set, or the instruction set being loaded and executed by the processor to implement the manipulator driving method according to any one of claims 12 to 15.

18. A computer-readable storage medium, storing at least one instruction, at least one program, a code set, or an instruction set, the at least one instruction, the at least one program, the code set, or the instruction set being loaded and executed by a processor to implement the manipulator driving method according to any one of claims 12 to 15.

19. A computer program product or a computer program, comprising computer instructions, the computer instructions being stored in a computer-readable storage medium; and a processor of a computer device reading the computer instructions from the computer-readable storage medium and executing the computer instructions, so that the computer device executes to implement the manipulator driving method according to any one of claims 12 to 15.

20. A chip, comprising a programmable logic circuit or program, and configured to implement the manipulator driving method according to any one of claims 12 to 15.
